# EUROPEAN PATENT SPECIFICATION

(11) **EP 3 430 861 B1**
(45) Date of publication and mention of the grant of the patent: **22.04.2020**
(21) Application number: 17711268.7
(22) Date of filing: 08.03.2017
(51) Int. Cl.: H05B 1/02, A47J 27/21

(54) **CONTROL FOR A LIQUID HEATING VESSEL**
STEUERUNG FÜR EINEN FLÜSSIGKEITSERHITZUNGSBEHÄLTER
COMMANDE POUR UN RÉCIPIENT DE CHAUFFAGE DE LIQUIDE

(30) Priority: 18.03.2016 GB 201604634; 18.03.2016 CN 201620213439 U
(43) Date of publication of application: 23.01.2019
(73) Proprietor: Strix Limited, Ronaldsway, Isle of Man IM9 2RG (GB)
(72) Inventor: MOUGHTON, Colin, Peter, Port St. Mary Isle of Man IM9 5LQ (GB); DOYLE, Raymond, Douglas Isle of Man IM4 4TT (GB); COWELL, Simon, John, Douglas Isle of Man IM2 2HG (GB); FUMAGALLI, Richard, Brandon, Chester Cheshire CH3 6DZ (GB); OWEN, Alan Campbell, Guangzhou Guangdong P.R.C. 510735 (CN); YICAI, Zheng, Guangzhou Guangdong P.R.C. 510760 (CN)
(74) Representative: Dehns
(86) International application number: PCT/GB2017/050618
(87) International publication number: WO 2017/158321

(56) References cited:
- EP-A1- 0 218 803
- EP-A1- 0 764 388
- EP-A2- 1 649 791

## Description

The present invention relates to controls for liquid heating vessels, and also to liquid heating vessels comprising a control fastened to a base thereof.

Typically a control for a liquid heating vessel, such as a kettle, comprises a moulded plastics unit which houses at least one switch for controlling a supply of electrical power to the liquid heating vessel, and a metal mount plate attached to the moulded plastics unit. Usually the metal mount plate comprises one or more holes allowing the metal mount plate to be fastened to a base of a liquid heating vessel, for example by studs or the like, so as to mount the control in thermal contact with the base. In the control, the mount plate may be attached to the moulded plastics unit by a number of metal tabs or lugs that are each bent out of the plane of the mount plate to pass through a corresponding opening provided in the moulded plastics unit, the ends of the tabs or lugs being bent over again to secure the mount plate and moulded unit together. An example of such a control is seen in WO 95/34187 and embodied by the U18 series of controls sold by Strix Limited.

In recent times there has arisen a need to improve the strength of kettle controls. For example, domestic kettles may be subjected to a "drop test" to ensure that they can withstand the forces experienced during transit, which can act to pull the main control moulding away from the mount plate. In order to address this problem, a control for a liquid heating vessel may be strengthened by adding one or more screws that pass through the mount plate and the moulding to hold them together. However this makes it more expensive to manufacture the control, both in terms of the component cost and additional assembly required.

The present invention aims to provide a control for a liquid heating vessel with improved attachment of the metal mount plate to the main moulded plastics unit.

According to the present invention there is provided a control for a liquid heating vessel wherein the control comprises a moulded plastics unit which houses at least one switch for controlling a supply of electrical power to the liquid heating vessel, and a generally planar metal mount plate attached to the moulded plastics unit, wherein the metal mount plate comprises one or more holes allowing the metal mount plate to be fastened to a base of a liquid heating vessel, wherein the metal mount plate further comprises a metal tab arranged to attach the mount plate to the moulded plastics unit, the metal tab comprising a pillar that is bent at its base out of the plane of the mount plate and the pillar comprising an arm extending substantially parallel to the mount plate in the same plane as the pillar, wherein the moulded plastics unit comprises a rest positioned to receive the arm of the metal tab, and wherein the mount plate is plastically deformed next to the metal tab so as to form a stiffened shape at the base of the pillar that creates a tensile force acting along the pillar so that the arm pulls down on the rest in the plane of the pillar and the metal tab is therefore held in tension to attach the mount plate to the moulded plastics unit.

Thus a control according to the present invention is strengthened by the mount plate being attached to the moulded plastics unit by a metal tab that is arranged to apply a tensile force acting along the pillar and hence out of the plane of the mount plate, in an analogous way to a screw applying a tensile force to hold the two parts together, but without the need for any such additional components. This may be referred to as a "tension locking" arrangement. The metal tab has a different structure to the metal lugs used to secure the mount plate to the moulding in prior controls, e.g. as seen in WO 95/34187, because the metal tab comprises a pillar bent out of the plane of the mount plate and an arm extending substantially parallel to the mount plate in the same plane as the pillar, rather than being bent over again. This means that when the arm pulls down on a rest provided by the moulded plastics unit, in the plane of the pillar, the rest is compressed by the tensile force acting along the pillar, and the strong metal pillar would have to itself deform before the mount plate can be loosened from the moulded plastics unit. This is enhanced by the stiffened shape creating the tensile force. In prior controls, on the other hand, the doubly bent metal lug is susceptible to coming loose because the bent over end of the tab is not in the same plane as the rest of the tab and only provides a friction grip onto the moulding rather than being held in tension.

According to at least some embodiments of the present invention, the pillar comprises two arms extending substantially parallel to the mount plate in the same plane as the pillar to form a T-shape. A metal tab having such a T-shape is structurally different from the bent over metal lugs used to secure the mount plate to the moulding in prior controls. A benefit of the T-shape is that the metal tab includes two arms, one arranged either side of the pillar, with both arms pulling down so that the tensile force created along the pillar is applied in a balanced way to the moulded plastics unit. The moulded plastics unit preferably comprises a corresponding pair of rests positioned either side of the pillar to receive the arms of the T-shape. Accordingly each metal tab can advantageously be held in tension with two different areas of contact, defined by the rests, acting to attach the mount plate to the moulded plastics unit. Such distribution of the tensile force increases the strength of attachment.

According to at least some embodiments of the present invention, the metal mount plate comprises a plurality of the metal tabs as described above, each arranged to attach the mount plate to the moulded plastics unit. For example, the metal mount plate comprises at least two metal tabs as described above.

The one or more rests formed on the moulded plastics unit may simply provide a surface against which the one or more arms of each metal tab can pull down. However, according to at least some embodiments of the present invention, the one or more rests provided by the moulded plastics unit may each comprise a slot that is dimensioned to receive an arm of the metal tab. Such matching slots assist in forming a tight tension "lock" between the metal tab and the moulded plastics unit.

The control may comprise one or more further features that act to assist in forming a secure attachment of the metal mount plate to the moulded plastics unit. In particular, the Applicant has recognised that it is important to enable rapid and precise assembly of the control as well as achieving strong attachment.

According to at least some embodiments of the present invention, the moulded plastics unit comprises a locating boss arranged to locate in an opening formed in the metal mount plate where the pillar of the metal tab is bent out of the plane of the mount plate. Each opening may have a T-shape corresponding to the T-shape of the associated metal tab. Where the metal mount plate comprises a plurality of metal tabs, the moulded plastics unit may comprise a locating boss for each of the metal tabs. An advantage of the moulded plastics unit providing such locating bosses is that they can enable precise location of the mount plate relative to the moulded unit in the plane of the control. This can help to speed up precise assembly. The one or more locating bosses can also contribute to increased structural in-plane strength.

According to at least some embodiments of the present invention, the moulded plastics unit comprises a moulded hook that includes a base portion protruding out of the plane of the moulded plastics unit and a hook portion bent over to extend substantially parallel to the moulded plastics unit. The hook portion may be spaced from the main moulded plastics unit by a height sufficient to accommodate the metal mount plate. The metal mount plate preferably comprises an aperture that is dimensioned to receive the moulded hook. The aperture may be formed in a portion of the mount plate that is angled out of the plane of the mount plate so as to assist in insertion of the hook portion through the aperture. During assembly, the metal mount plate may be slid over the moulded hook by pushing the hook portion through the aperture. The base portion then engages with the aperture to hold the mount plate in a defined lateral position. The moulded hook advantageously holds the mount plate against the moulded plastics unit while the mount plate next to the one or more metal tabs is bent, during assembly, so that the arms of the metal tabs press down on the corresponding rests and the tension locking is achieved.

According to a further preferred feature of the present invention, the aperture in the metal mount plate comprises a shaped edge that is arranged to mate with a corresponding protrusion or indentation on a facing surface of the moulded hook. This can assist in the moulded hook gripping onto the metal mount plate so as to contribute to the attachment strength of the control. Preferably the hook portion comprises a curved protrusion or indentation on the facing surface of the moulded hook. The shaped edge may comprise a correspondingly curved indentation or protrusion for mating purposes. These curved mating features contribute to a stiffened geometry for the additional attachment point provided by the moulded hook.

According to at least some embodiments of the present invention, the control comprises three main attachment points between the metal mount plate and the moulded plastics unit. These three attachment points may comprise two metal tabs as described above and one moulded hook as described above. The three attachment points may be spaced from one another to form the corners of a triangle covering a central portion of the control. It is an advantage of such an arrangement that the three attachment points can achieve a strong connection between the mount plate and the moulded unit without needing any additional screws or other fasteners.

The Applicant has realised that by providing the control with built-in attachment points between the metal mount plate and the moulded plastics unit, and in particular a compact arrangement of three attachment points as described above, the mount plate may have a smaller area than in prior controls. For example, the mount plate does not need to provide space for additional screw holes.

According to at least some embodiments of the present invention, the mount plate comprises a maximum diameter that is no more than 75 mm, preferably no more than 70 mm, and further preferably less than 70 mm. Most preferably the mount plate comprises a maximum diameter that is about 67 mm. This can be compared to a maximum diameter of 76 mm for the Applicant's U18 series of controls. As a result, the space needed to accommodate the mount plate on the base of a liquid heating vessel is reduced. This means that the heated base can itself be reduced in size. This enables the manufacture of smaller liquid heating vessels for the same heating power, reducing the costs of manufacture and also of transportation.

According to the present invention there is further provided a liquid heating vessel comprising a base in contact with liquid during use and a heating element mounted in thermal contact with the base, and a control as described hereinabove with the metal mount plate of the control fastened to the base in an area circumscribed by the heating element. It will be appreciated that the area circumscribed by the heating element may be reduced to match the maximum diameter of the mount plate. Thus the area circumscribed by the heating element may comprise a maximum diameter that is less than 70 mm, for example 67 mm. This means that the base can be made smaller and the heating element is able to heat the base more efficiently. As a consequence, the base may be made thinner than usual.

According to at least some embodiments of the present invention, the base of the liquid heating vessel comprises a thermal diffuser plate to which the heating element is mounted and the thermal diffuser plate preferably has a thickness that is less than 2 mm. For example, the thickness of the thermal diffuser plate may be reduced to about 1.5 mm in combination with the more compact mount plate of a control as described above.

According to at least some embodiments of the present invention, the base of the liquid heating vessel is substantially flat. The metal mount plate of the control can be fastened to the flat base. The flat base of the liquid heating vessel may comprise one or more studs that pass through the one or more holes of the metal mount plate to enable the control to be fastened in position.

A liquid heating vessel as described herein is preferably a cordless liquid heating vessel of the type comprising a 360° cordless electrical connector. Such a 360° cordless vessel can be connected to an electrical power base irrespective of their relative angular orientation, or substantially irrespective of their relative angular orientation. For example, the 360° cordless electrical connector may allow for connection to an electrical power base through a relative angular range that is preferably at least 300°, 320°, or 340° and substantially up to 360°.

Thus according to at least some embodiments of the present invention, the moulded plastics unit of the control comprises a cylindrical wall housing a 360° cordless electrical connector. Preferably the 360° cordless electrical connector comprises at least one metal ring arranged concentrically around a central pin. Preferably the 360° cordless electrical connector is electrically connected to the at least one switch for controlling a supply of electrical power to the liquid heating vessel. The 360° cordless electrical connector may be a three-pole connector, for example of the type disclosed in WO95/08204, or a five-pole connector, for example of the type disclosed in WO01/28294 .

Some preferred embodiments of the present invention will now be described, by way of example only, and with reference to the accompanying drawings, in which:
Figure 1 provides an upper perspective view of a control according to an embodiment of the present invention;
Figure 2 provides a lower perspective view of a control according to an embodiment of the present invention;
Fig. 3a shows an upper side of the metal mount plate which is attached to the control seen in Figures 1 and 2;
Fig. 3b shows a lower side of the metal mount plate which is attached to the control seen in Figures 1 and 2;
Figures 4a and 4b provide a close-up view of the control seen in Figure 2,
respectively during and after assembly;
Figure 5 provides a close-up view of a prior art control for comparison with Figure 4b;
Fig. 6a shows a plan view of a metal mount plate fastened to the base of a liquid heating vessel; and
Fig. 6b shows a cross-sectional side view of a metal mount plate fastened to the base of a liquid heating vessel.

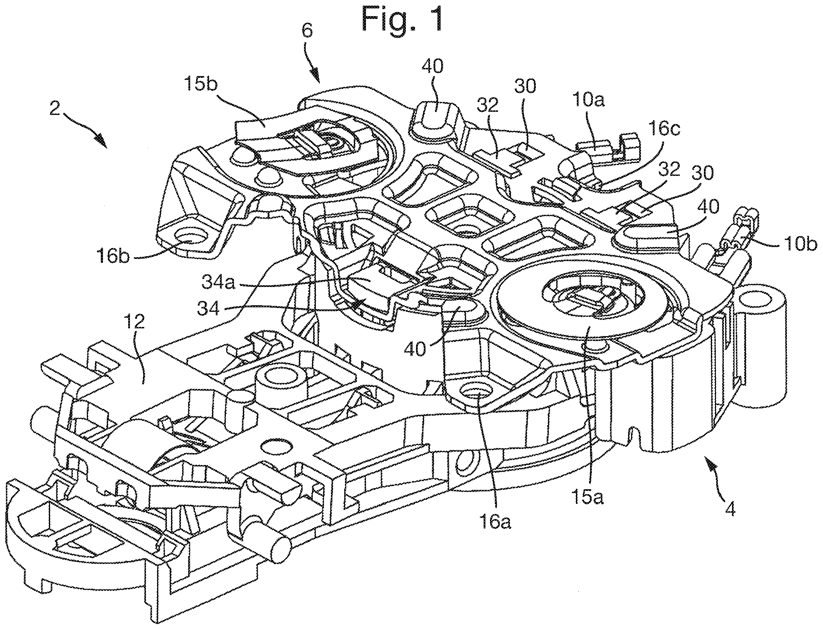

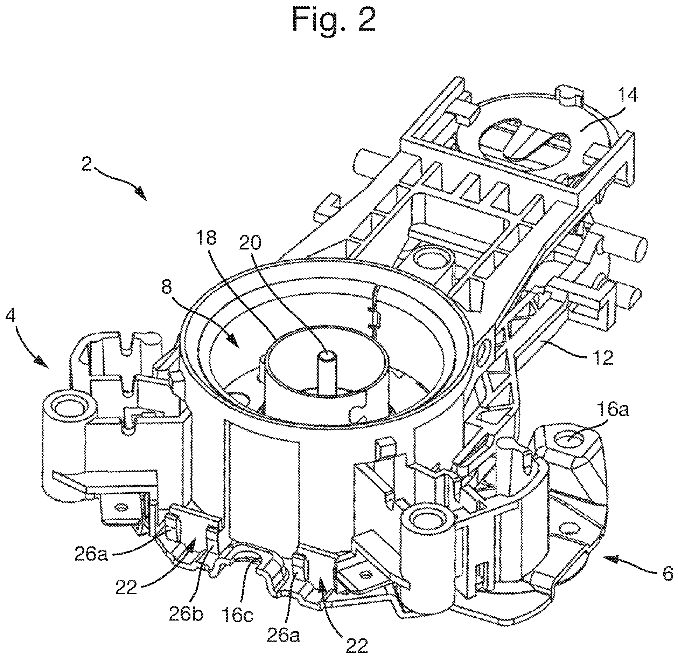

There is seen in Figures 1 and 2 a control 2 for a liquid heating vessel of the type comprising a moulded plastics unit 4 to which there is attached a generally planar metal mount plate 6. The moulded plastics unit 4 includes a 360° cordless electrical connector 8 (seen in Fig. 2) which enables an electrical power supply to be connected to the control 2. Although not visible in the Figures, the moulded plastics unit 4 houses at least one switch which can be opened in order to interrupt the electrical power supply. An electrical power supply circuit including the at least one switch is terminated by a pair of electrical terminals 10a, 10b which enable the electrical power supply to be connected to a heating element or other electrical component in a liquid heating vessel.

The control seen in Figures 1 and 2 functions in a similar way to the applicant's U18 series of controls, and reference may be made to the principles of operation disclosed in WO 95/34187. Although features of the control 2 which are already known in general from the prior art will not be described in further detail here, it may be seen that the control 2 includes a spring-mounted trip lever 12 that provides for manual operation of at least one switch in the electrical power supply circuit. Furthermore, it may be seen from Figure 2 that a steam-sensitive bimetallic actuator 14 is mounted at one end of the moulded plastics unit 4 and arranged to operate the trip lever 12 upon detecting boiling in the liquid heating vessel.

As seen in Figure 1, on an upper surface of the metal mount plate 6 there is positioned a first bimetallic actuator 15a and a second bimetallic actuator 15b. The two bimetallic actuators 15a, 15b provide the control 2 with an overheat protection function. It may be seen that the metal mount plate 6 includes three holes 16a, 16b, 16c which allow the mount plate 6 and hence the control 2 to be fastened to a base of a liquid heating vessel, for example using mounting studs protruding from the underside of the base. When the control 2 is fastened against the base of a liquid heating vessel, the first and second bimetallic actuators 15a, 15b are held in thermal contact with the heated base so as to be sensitive to its temperature. The first bimetallic actuator 15a is arranged to operate upon reaching a first, lower temperature and therefore provides primary overheat protection. The second bimetallic actuator 15b is arranged to operate upon reaching a second, higher temperature and therefore provides secondary overheat protection. Such overheat protection may be in required in the event that, for example, electrical power is supplied to a liquid heating vessel even when it is empty. In such a control the first bimetallic actuator 15a is typically arranged to operate a switch housed inside the moulded plastics unit 4 that opens a neutral side of the electrical power supply. The neutral side of the electrical power supply may be provided by a ring 18 of the cordless electrical connector 8. The second bimetallic actuator 15b is typically arranged to operate a switch that opens a live side of the electrical power supply, which may be provided by a pin 20 of the cordless electrical connector 8. These features are seen in Figure 2.

It can be seen from Figure 1 that the first bimetallic actuator 15a has a generally circular shape, while the second bimetallic actuator 15b has generally rectangular shape. Both the first and second bimetallic actuators 15a, 15b are snap action actuators that are concave. The generally circular shape of the first bimetallic actuator 15a provides a circular edge in contact with the heated base of the liquid heating vessel, which means that the bimetallic actuator 15a can respond quickly to an overheat condition. The generally rectangular shape of the second bimetallic actuator 15b, on the other hand, means that the bimetallic actuator 15b has four distinct points of contact with the heated base and therefore thermal conduction may be slightly less efficient. However, as the second bimetallic actuator 15b performs a secondary overheat protection role it is not as critical to provide a fast response. An advantage of the first bimetallic actuator 15a operating to open the neutral side of the electrical power supply, before the live side, is that it avoids the risk of electrical arcing from a contact of the switch to an earthed metal component such as the metal mount plate. The switch on the neutral side is on the opposite side of the electrical load to the voltage supply, so there is no potential difference between this switch and earth. This eliminates the possibility of electrical shorting to earth when the contacts of the neutral switch are opened. If the electrical power supply circuit were to be interrupted by opening the switch on the live side instead, there would be a tendency for shorting to earth resulting in a rapid discharge of electrical energy i.e. so-called "flash to earth". The trip lever 12 is also arranged to operate a switch that preferentially opens the neutral side of electrical power supply, so that the electrical power supply circuit is always interrupted first on the neutral side.

There will now be described a novel way in which the metal mount plate 6 is attached to the moulded plastics unit 4 in a more robust manner than prior art controls.

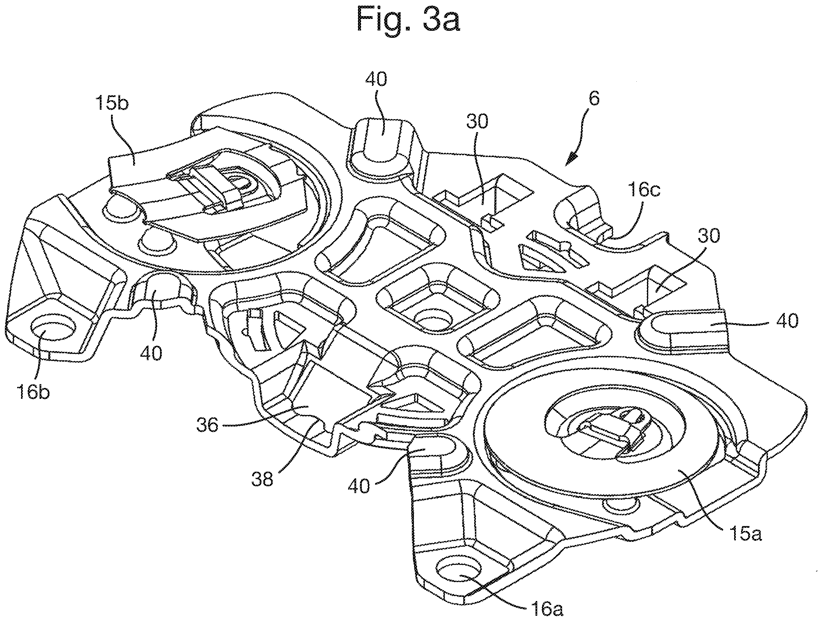

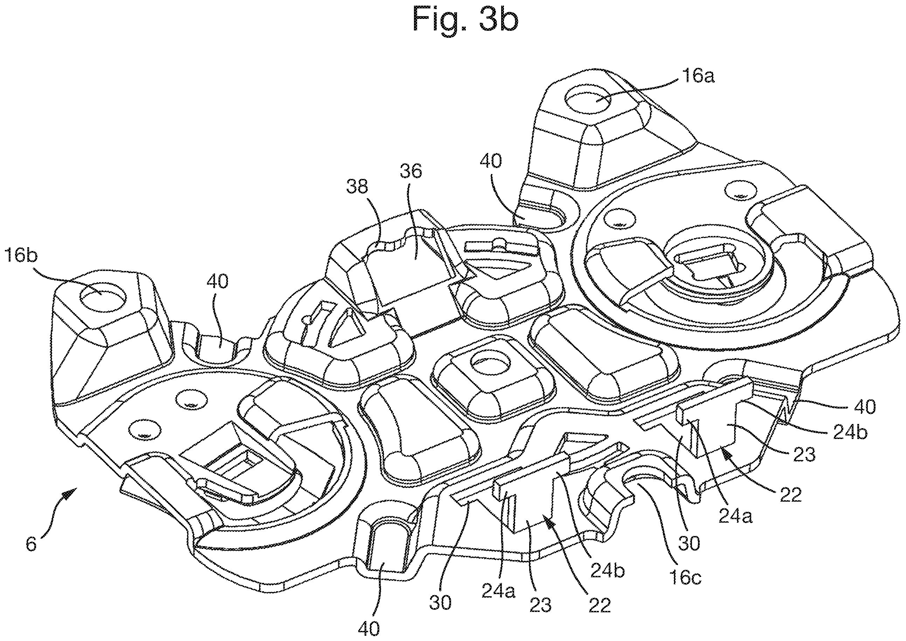

It may be seen from Figure 2 that the metal mount plate 6 comprises a pair of metal tabs 22 that are bent out of the plane of the mount plate 6 so as to extend downwardly relative to the upper surface of mount plate 6 that carries the bimetallic actuators 15a, 15b. The metal mount plate 6 is seen in more detail in Figures 3a and 3b. In particular, it is clearly seen from Figure 3b that each of the metal tabs 22 comprises an upstanding pillar 23 bent at its base out of the plane of the mount plate 6 and a pair of arms 24a, 24b extending substantially parallel to the mount plate 6 but in the same plane as the pillar 23. The metal tabs 22 therefore have a T-shape formed in a plane that is generally perpendicular to the plane of the mount plate 6.

Referring to Figure 2, it may be seen that each of the metal tabs 22 engages against a pair of rests 26a, 26b that are formed in the moulded plastics unit 4. The metal tabs 22 firmly attach the mount plate 6 to the moulded plastics unit 4 because the mount plate 6 next to each metal tab 22 is plastically deformed during assembly to form a stiffened shape at the base of the pillar 23 that so that the arms 24a, 24b pull down on the corresponding rests 26a, 26b and therefore a tensile force is created along the pillar 23 of each metal tab 22.

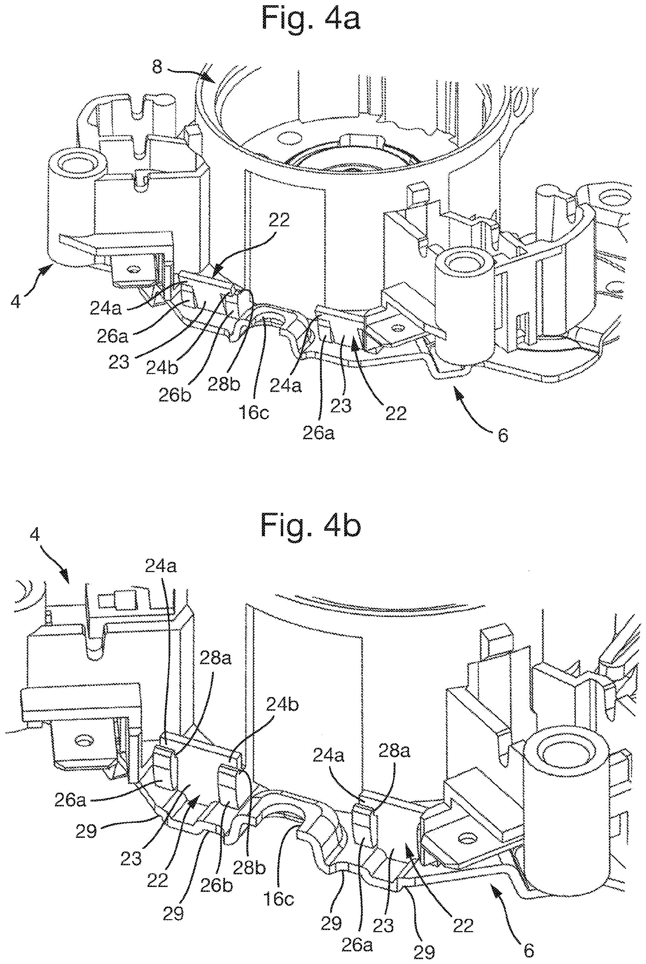

Figure 4a shows the control 2 in close-up during the assembly process. In order to tighten the attachments between the mount plate 6 and the moulded plastics unit 4, in a further assembly step the mount plate 6 is plastically deformed next to each of the metal tabs 22 so as to apply a tensile force acting along the pillar 23. Figure 4b shows the mount plate 6 attached to the moulded plastics unit 4 after assembly of the control 2. It may be seen that one or more bends 29 in the mount plate 6 next to each of the metal tabs 22 act to form a stiffened shape at the base of the pillar 23 which creates a tensile force acting along the pillar 23 so that the arms 24a, 24b are pulled down into the corresponding slots (e.g. slot 28b) and press down on the rests 26a 26b in the plane of the pillar 23. The result is a tension locking attachment between the metal mount plate 6 and the moulded plastics unit 4 which is very strong because of the tensile forces acting in the plane of each upstanding metal tab 22 and the stiffened shape.

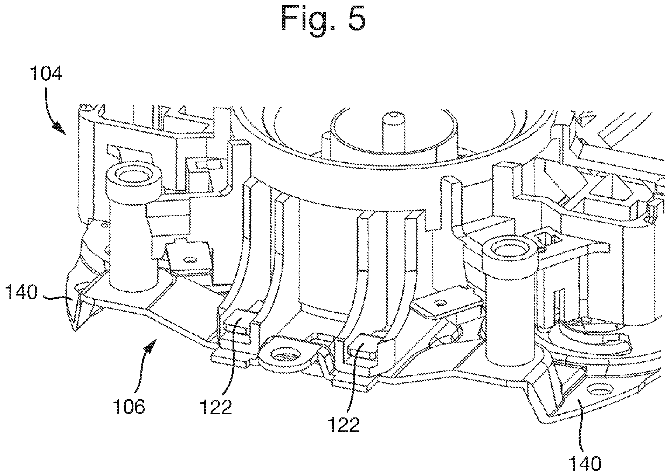

Figure 5 provides a closer view of the same part of a prior art control for comparison purposes. It can be seen that, in the prior art, the metal mount plate 106 is attached to a moulded plastics unit 104 by a pair of lugs 122 that are bent out of the plane of the mount plate 106 and then bent over again so as to grip on to the moulded plastics unit 104. However, it will be appreciated that there is inherent weakness in this form of attachment, as each of the lugs 122 can only apply a weak tensile force that is in a different plane and which may easily be overcome by external forces acting on the control, for example during a drop test. The lugs 122 can easily be bent open so that they are no longer gripping onto the moulded plastics unit 104.

With reference to Figures 3a and 3b, it may be seen that an opening 30 is formed in the metal mount plate 6 where the pillar 23 of the metal tab 22 is bent out of plane of the mount plate 6. These openings 30 have a corresponding T-shape. With particular reference to Figures 1 and 3a, it may be seen that in the assembled control 2 a locating boss 32 provided by the moulded plastics unit 4 extends through each of the openings 30. These locating bosses 32 enable precise location of the metal mount plate 6 in its plane in relation to the moulded plastics unit 4. The locating bosses 32 also provide increased structural in-plane strength.

The two metal hooks 22 described above provide two main attachment points between the metal mount plate 6 and the moulded plastics unit 4. In addition, a further attachment point is provided by a moulded plastic hook 34 as seen in Figure 1. The moulded hook 34 includes a base portion protruding out of the plane of the moulded plastics unit 4 and a hook portion 34a that is bent over to extend substantially parallel to the moulded plastics unit 4, on top of the metal mount plate 6. It will be understood with reference to Figures 3a and 3b that the metal mount plate 6 includes an aperture 36 that is dimensioned to receive this moulded hook 34 during assembly of the control 2. The aperture 36 is formed in a portion of the mount plate 6 that is angled out of the plane of mount plate 6, e.g. at an angle of about 45°. During assembly, the metal mount plate 6 is slid in in its plane on top of the moulded plastics unit 4 so that the moulded hook 34 is engaged in the aperture 36. The engagement between the moulded hook 34 and the metal mount plate 6 can help to speed up assembly. Once the moulded hook 34 has engaged with the aperture 36 in the mount plate 6, the metal tabs 22 can be used to form a tension locking attachment as already described above. As is seen in Figures 3a and 3b, the aperture 36 comprises a shaped edge 38, the purpose of which is to mate with corresponding protrusions and/or indentations on a facing surface of the moulded hook 34. As the facing surface is on the underside of the moulded hook 34, it cannot be seen in Figure 1. The edge 38 is shaped with two curved sections in order to provide a stiffened geometry.

With reference to Figure 1, it may be seen that the moulded hook 34 provides one of three attachment points between the metal mount plate 6 and the moulded plastics unit 4. The other two attachment points are provided by the locating bosses 32 and corresponding metal tabs 22 that provide for tension locking. It can be seen that these three attachment points are spaced from one another to form the corners of a triangle covering a central portion of the control 2. In particular, this triangle of attachment points is located between the first and second bimetallic actuators 15a, 15b. This arrangement can help to ensure that the moulded plastics unit 4 does not come loose from the metal mount plate 6 in the area where the control 2 is fastened to the base of a liquid heating vessel during use.

As is mentioned above, the metal mount plate 6 includes three holes 16a, 16b, 16c that can receive fastening studs protruding from the base of a liquid heating vessel so as to enable the control 2 to be fastened in position. The inherent manufacturing tolerances on the stud heights and on the mount plate holes 16a, 16b, 16c give rise to compression on the mount plate 6 in the vicinity of the holes 16a, 16b, 16c. This compression causes the mount plate 6 to be pulled against the base of the liquid heating vessel, which can cause the bimetallic actuators 15a, 15b to be put under local compression and this may adversely affect their operating temperatures. In order for the mount plate 6 to be fastened at a set distance from the base of the liquid heating vessel, it is known for the mount plate 6 to include datum pads that bear against the surface of the base and prevent undesirable compression of the bimetallic actuators 15a, 15b. These datum pads are raised portions on the upper surface of the mount plate 6.

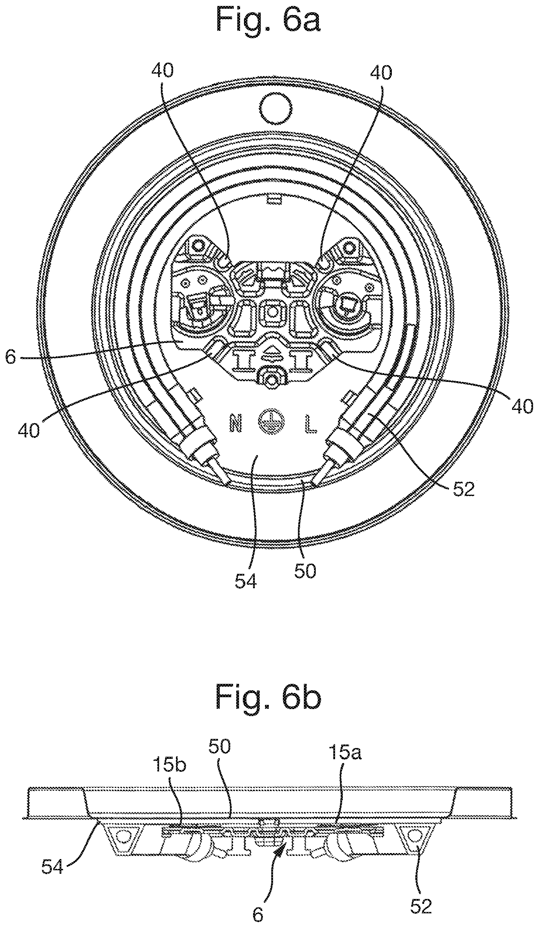

As is seen in Figure 5, in a prior control the datum pads 140 are positioned at a periphery of the metal mount plate 106, next to the bimetallic actuators (not seen in this view). However, the Applicant has found that the surfaces of these datum pads 140 that contact the heated base of the liquid heating vessel may be positioned too close to the heating element and provide additional heat transfer to the bimetallic actuators which can cause the actuators to operate erroneously, as well as potentially causing excessive heat transfer that can melt the moulded plastics unit 104. In a control 2 according to embodiments of the present invention, on the other hand, the metal mount plate 6 includes datum pads 40 which are positioned inwardly of the bimetallic actuators 15a, 15b towards the centre of the mount plate 6, as seen in Figures 1 and 3. The four datum pads 40 are discrete raised surfaces that stand above the general surface of the mount plate 6 so as to come into contact with the base of a liquid heating vessel when the control 2 is fastened in position, thereby ensuring that the bimetallic actuators 15a, 15b are not put under compressive stress. The datum pads 40 are still positioned close enough to the fastening holes 16a, 16b, 16c to counteract compression of the mount plate 6, but are no longer in a thermal conduction path between the bimetallic actuators 15a, 15b and a heating element that circumscribes the mount plate 6 when it is fastened to a base. This may be better understood with reference to Fig. 6a, described in more detail below.

In addition, the datum pads 40 in a control 2 according to embodiments of the present invention are smaller than the datum pads 140 seen in the prior control 102 of Figure 5, so as to reduce unwanted thermal transfer into the metal mount plate 6. The datum pads 40 also have a stiffening effect on the metal mount plate 6 that contributes to its rigidity. The metal mount plate 6 may further include one or more cut-out portions and/or portions that are bent out of the plane of the mount plate 6, so as to help absorb any distortions of the mount plate 6 e.g. caused by compressive forces from the stud fasteners or introduced by thermal expansion.

Figures 6a and 6b show the metal mount plate 6 of the control 2 fastened to the base 50 of a liquid heating vessel. The moulded plastics unit is omitted from view, so that the mount plate 6 is seen alone from a lower side. There is a heating element 52 mounted in thermal contact with the base 50, for example a sheathed electrical heating element in a horseshoe shape. It can be seen from Fig. 6b that a thermal diffuser plate 54 is attached under the base 50 and assists in spreading heat from the heating element 52 across the area of the base 50. The metal mount plate 6 of the control 2 is fastened to the base 50, through the intervening thermal diffuser plate 54, in an area circumscribed by the heating element 52. It can be seen from Figure 6b that the base 50 is substantially flat in the area where the heating element 52 and metal mount plate 6 are attached.

It is an advantage of the present invention that the metal mount plate 6 can be made smaller than in standard controls. The compact size of the metal mount plate 6 can be attributed, at least in part, to the improved attachment provided by the metal tabs and moulded hook, as described above, so that no additional means of attachment such as screws are required to attach the metal mount plate 6 to the moulded plastics unit of the control. Also the re-positioning of the datum pads to an inner side of the bimetallic actuators enables the maximum diameter of the mount plate 6 to be reduced. In these embodiments the metal mount plate 6 has a maximum diameter that is no more than 75 mm, for example less than 70 mm, and about 67 mm in a particular example. Accordingly the area circumscribed by the heating element 52 may be reduced to having a maximum diameter that is no more than 75 mm, for example less than 70 mm, and about 67 mm in a particular example. As a result of the smaller area of the base 50 being circumscribed by the heating element 52, there is more efficient heat conduction into the base 50. This means that the thermal diffuser plate 54 can be made thinner than previously known. Advantageously the thermal diffuser plate 54 has a thickness that is less than 2 mm, for example about 1.5 mm.

## Claims

1. A control (2) for a liquid heating vessel comprising a moulded plastics unit (4) which houses at least one switch for controlling a supply of electrical power to the liquid heating vessel, and a generally planar metal mount plate (6) attached to the moulded plastics unit (4), wherein the metal mount plate (6) comprises one or more holes (16a, 16b, 16c) allowing the metal mount plate (6) to be fastened to a base (50) of a liquid heating vessel, wherein the metal mount plate (6) further comprises a metal tab (22) arranged to attach the mount plate (6) to the moulded plastics unit (4), **characterised in that** the metal tab (22) comprising a pillar (23) that is bent at its base out of the plane of the mount plate (6) and the pillar (23) comprising an arm (24a, 24b) extending substantially parallel to the mount plate (6) in the same plane as the pillar (23), and **in that** the moulded plastics unit (4) comprises a rest (26a, 26b) positioned to receive the arm (24a, 24b) of the metal tab (22), and **in that** the mount plate (6) is plastically deformed next to the metal tab (22) so as to form a stiffened shape at the base of the pillar (23) that creates a tensile force acting along the pillar (23) so that the arm (24a, 24b) pulls down on the rest (26a, 26b) in the plane of the pillar (23) and the metal tab (22) is therefore held in tension to attach the mount plate (6) to the moulded plastics unit (4).

2. A control (2) as claimed in claim 1, wherein the pillar (23) comprises two arms (24a, 24b) extending substantially parallel to the mount plate (6) in the same plane as the pillar (23) to form a T-shape and wherein optionally the moulded plastics unit (4) comprises a corresponding pair of rests (26a, 26b) positioned either side of the pillar (23) to receive the arms (24a, 24b) of the T-shape.

3. A control (2) as claimed in any preceding claim, wherein the metal mount plate (6) comprises a plurality of said metal tabs (22) arranged to attach the mount plate (6) to the moulded plastics unit (4).

4. A control (2) as claimed in any preceding claim, wherein the rest (26a, 26b) comprises a slot (28a, 28b) that is dimensioned to receive the arm (24a, 24b) of the metal tab (22).

5. A control (2) as claimed in any preceding claim, wherein an opening (30) is formed in the metal mount plate (6) where the pillar (23) of the metal tab (22) is bent out of the plane of the mount plate (6) and the moulded plastics unit (4) comprises a locating boss (32) arranged to locate in the opening (30).

6. A control (2) as claimed in any preceding claim, wherein the moulded plastics unit (4) comprises a moulded hook (34) that includes a base portion protruding out of the plane of the moulded plastics unit and a hook portion (34a) bent over to extend substantially parallel to the moulded plastics unit (4).

7. A control (2) as claimed in claim 6, wherein the metal mount plate comprises an aperture (36) that is dimensioned to receive the moulded hook (34) and wherein optionally the aperture (36) is formed in a portion of the mount plate (6) that is angled out of the plane of the mount plate (6).

8. A control (2) as claimed in claim 7, wherein the aperture (36) comprises a shaped edge (38) that is arranged to mate with a corresponding protrusion or indentation on a facing surface of the moulded hook (34) and wherein optionally the hook portion (34a) comprises a curved protrusion or indentation on the facing surface of the moulded hook (34).

9. A control (2) as claimed in any of claims 6-8, wherein the moulded hook (34) provides an attachment point between the metal mount plate (6) and the moulded plastics unit (4).

10. A control (2) as claimed in claim 9, wherein the control (2) two further attachment points respectively provided by said metal tab (22) and a further metal tab (22), and optionally wherein said three attachment points are spaced from one another to form the corners of a triangle covering a central portion of the control (2).

11. A control (2) as claimed in any preceding claim, wherein the metal mount plate (6) comprises a maximum diameter that is no more than 75 mm, optionally less than 70 mm, optionally about 67 mm.

12. A control (2) as claimed in any preceding claim, wherein first and second bimetallic actuators (15a, 15b) are mounted on a surface of the metal mount plate (6) and arranged to operate the least one switch, wherein the first and second bimetallic actuators (16a, 16b) have different shapes.

13. A control (2) as claimed in any preceding claim, wherein the moulded plastics unit (4) comprises a cylindrical wall housing a 360° cordless electrical connector (8).

14. A liquid heating vessel comprising a base (50) in contact with liquid during use and a heating element (52) mounted in thermal contact with the base (50), and a control (2) as claimed in any preceding claim with the metal mount plate (6) of the control (2) fastened to the base (50) in an area circumscribed by the heating element (52).

15. A liquid heating vessel as claimed in claim 14, wherein the area circumscribed by the heating element comprises a maximum diameter that is less than 70 mm.

## Patentansprüche

1. Steuerung (2) für ein Flüssigkeitsheizgefäß, umfassend eine Kunststoff-Formeinheit (4), in der mindestens ein Schalter zum Steuern einer Zufuhr von elektrischer Leistung an das Flüssigkeitsheizgefäßes untergebracht ist, und eine im Allgemeinen ebene Metallmontageplatte (6), die an der Kunststoff-Formeinheit (4) befestigt ist, wobei die Metallmontageplatte (6) ein oder mehrere Löcher (16a, 16b, 16c) umfasst, was es ermöglicht, die Metallmontageplatte (6) an einer Basis (50) eines Flüssigkeitsheizgefäßes zu befestigen, wobei die Metallmontageplatte (6) weiter eine Metalllasche (22) umfasst, die angeordnet ist, um die Montageplatte (6) an der Kunststoff-Formeinheit (4) zu befestigen, **dadurch gekennzeichnet, dass** die Metalllasche (22) eine Säule (23) umfasst, die an ihrer Basis aus der Ebene der Montageplatte (6) herausgebogen ist, und die Säule (23) einen Arm (24a, 24b) umfasst, der sich im Wesentlichen parallel zu der Montageplatte (6) in derselben Ebene wie die Säule (23) erstreckt, und dass die Kunststoff-Formeinheit (4) eine Auflage (26a, 26b) umfasst, die positioniert ist, um den Arm (24a, 24b) der Metalllasche (22) aufzunehmen, und dass die Montageplatte (6) neben der Metalllasche (22) plastisch verformt wird, um so eine versteifte Form an der Basis der Säule (23) zu bilden, die eine Zugkraft erzeugt, die entlang der Säule (23) wirkt, so dass der Arm (24a, 24b) die Auflage (26a, 26b) in der Ebene der Säule (23) nach unten zieht und die Metalllasche (22) dadurch unter Spannung gehalten wird, um die Montageplatte (6) an der Kunststoff-Formeinheit (4) zu befestigen.

2. Steuerung (2) nach Anspruch 1, wobei die Säule (23) zwei Arme (24a, 24b) umfasst, die sich im Wesentlichen parallel zur Montageplatte (6) in derselben Ebene wie die Säule (23) erstrecken, um eine T-Form zu bilden, und wobei die Kunststoff-Formeinheit (4) wahlweise ein entsprechendes Paar von Auflagen (26a, 26b) umfasst, die auf jeder Seite der Säule (23) positioniert sind, um die Arme (24a, 24b) der T-Form aufzunehmen.

3. Steuerung (2) nach einem der vorherigen Ansprüche, wobei die Metallmontageplatte (6) eine Vielzahl der Metalllaschen (22) umfasst, die angeordnet sind, um die Montageplatte (6) an der Kunststoff-Formeinheit (4) zu befestigen.

4. Steuerung (2) nach einem der vorherigen Ansprüche, wobei die Auflage (26a, 26b) einen Schlitz (28a, 28b) umfasst, der dimensioniert ist, um den Arm (24a, 24b) der Metalllasche (22) aufzunehmen.

5. Steuerung (2) nach einem der vorherigen Ansprüche, wobei eine Öffnung (30) in der Metallmontageplatte (6) ausgebildet ist, wo die Säule (23) der Metalllasche (22) aus der Ebene der Montageplatte (6) herausgebogen ist und die Kunststoff-Formeinheit (4) einen Positionierungsvorsprung (32) umfasst, der angeordnet ist, um in der Öffnung (30) positioniert zu sein.

6. Steuerung (2) nach einem der vorherigen Ansprüche, wobei die Kunststoff-Formeinheit (4) einen geformten Haken (34) umfasst, der einen Basisabschnitt enthält, der aus der Ebene der Kunststoff-Formeinheit herausragt, und einen Hakenabschnitt (34a), der umgebogen ist, um sich im Wesentlichen parallel zu der Kunststoff-Formeinheit (4) zu erstrecken.

7. Steuerung (2) nach Anspruch 6, wobei die Metallmontageplatte eine Blende (36) umfasst, die zur Aufnahme des geformten Hakens (34) dimensioniert ist, und wobei die Blende (36) wahlweise in einem Abschnitt der Montageplatte (6) ausgebildet ist, der aus der Ebene der Montageplatte (6) abgewinkelt ist.

8. Steuerung (2) nach Anspruch 7, wobei die Öffnung (36) eine geformte Kante (38) umfasst, die angeordnet ist, um mit einem entsprechenden Vorsprung oder einer entsprechenden Vertiefung auf einer gegenüberliegenden Oberfläche des geformten Hakens (34) zusammenzupassen, und wobei der Hakenabschnitt (34a) wahlweise einen gekrümmten Vorsprung oder eine gekrümmte Vertiefung auf der gegenüberliegenden Oberfläche des geformten Hakens (34) umfasst.

9. Steuerung (2) nach einem der Ansprüche 6-8, wobei der geformte Haken (34) einen Befestigungspunkt zwischen der Metallmontageplatte (6) und der Kunststoff-Formeinheit (4) bereitstellt.

10. Steuerung (2) nach Anspruch 9, wobei die Steuerung (2) zwei weitere Befestigungspunkte, die jeweils durch die Metalllasche (22) und eine weitere Metalllasche (22) bereitgestellt werden, und wobei die drei Befestigungspunkte wahlweise voneinander beabstandet sind, um die Ecken eines Dreiecks zu bilden, das einen zentralen Abschnitt der Steuerung (2) abdeckt.

11. Steuerung (2) nach einem der vorherigen Ansprüche, wobei die Metallmontageplatte (6) einen maximalen Durchmesser umfasst, der nicht mehr als 75 mm, wahlweise weniger als 70 mm, wahlweise etwa 67 mm beträgt.

12. Steuerung (2) nach einem der vorherigen Ansprüche, wobei erste und zweite Bimetall-Aktuatoren (15a, 15b) auf einer Oberfläche der Metallmontageplatte (6) montiert sind und angeordnet sind, um den mindestens einen Schalter zu betätigen, wobei die ersten und zweiten Bimetall-Aktuatoren (16a, 16b) unterschiedliche Formen haben.

13. Steuerung (2) nach einem der vorherigen Ansprüche, wobei die Kunststoff-Formeinheit (4) eine zylindrische Wand umfasst, die einen 360° schnurlosen elektrischen Verbinder (8) aufnimmt.

14. Flüssigkeitsheizgefäß, umfassend eine Basis (50), die während des Gebrauchs mit Flüssigkeit in Kontakt steht, und ein Heizelement (52), das in thermischem Kontakt mit der Basis (50) montiert ist, und eine Steuerung (2) nach einem der vorherigen Ansprüche, wobei die Metallmontageplatte (6) der Steuerung (2) an der Basis (50) in einem von dem Heizelement (52) umschriebenen Bereich befestigt ist.

15. Flüssigkeitsheizgefäß nach Anspruch 14, wobei der von dem Heizelement umschriebene Bereich einen maximalen Durchmesser umfasst, der weniger als 70 mm beträgt.

## Revendications

1. Commande (2) pour un récipient de chauffage de liquide comprenant une unité de matière plastique moulée (4) qui héberge au moins un commutateur pour commander une alimentation en énergie électrique pour le récipient de chauffage de liquide, et une plaque de montage métallique de forme généralement plane (6) fixée à l'unité de matière plastique moulée (4), dans laquelle la plaque de montage métallique (6) comprend un ou plusieurs trous (16a, 16b, 16c) permettant de fixer la plaque de montage métallique (6) à une base (50) d'un récipient de chauffage de liquide, dans laquelle la plaque de montage métallique (6) comprend en outre une agrafe métallique (22) agencée pour fixer la plaque de montage (6) à l'unité de matière plastique moulée (4), **caractérisée en ce que** l'agrafe métallique (22) comprend un montant (23) qui est fléchi à sa base hors du plan de la plaque de montage (6) et le montant (23) comprend un bras (24a, 24b) s'étendant de manière sensiblement parallèle à la plaque de montage (6) dans le même plan que le montant (23), et **en ce que** l'unité de matière plastique moulée (4) comprend un support (26a, 26b) positionnée pour recevoir le bras (24a, 24b) de l'agrafe métallique (22) et **en ce que** la plaque de montage (6) présente une déformation plastique à proximité de l'agrafe métallique (22) de manière à présenter une forme renforcée à la base du montant (23) qui crée une force de traction agissant le long du montant (23) de sorte que le bras (24a, 24b) s'abaisse sur le support (26a, 26b) dans le plan du montant (23) et que l'agrafe métallique (22) soit donc maintenue sous tension pour fixer la plaque de montage (6) à l'unité de matière plastique moulée (4).

2. Commande (2) selon la revendication 1, dans laquelle le montant (23) comprend deux bras (24a, 24b) s'étendant de manière sensiblement parallèle à la plaque de montage (6) dans le même plan que le montant (23) pour présenter une forme en T et dans laquelle l'unité de matière plastique moulée (4) comprend éventuellement une paire correspondante de supports (26a, 26b) positionnés sur l'un et l'autre côté du montant (23) pour recevoir les bras (24a, 24b) de la forme en T.

3. Commande (2) selon l'une quelconque des revendications précédentes, dans laquelle la plaque de montage métallique (6) comprend une pluralité desdites agrafes métalliques (22) agencées pour fixer la plaque de montage (6) à l'unité de matière plastique moulée (4).

4. Commande (2) selon l'une quelconque des revendications précédentes, dans laquelle le support (26a, 26b) comprend une fente (28a, 28b) qui est dimensionnée pour recevoir le bras (24a, 24b) de l'agrafe métallique (22).

5. Commande (2) selon l'une quelconque des revendications précédentes, dans laquelle une ouverture (30) est formée dans la plaque de montage métallique (6) à l'endroit où le montant (23) de l'agrafe métallique (22) est fléchi hors du plan de la plaque de montage (6) et l'unité de matière plastique moulée (4) comprend un bossage de localisation (32) agencé pour se localiser dans l'ouverture (30).

6. Commande (2) selon l'une quelconque des revendications précédentes, dans laquelle l'unité de matière plastique moulée (4) comprend un crochet moulé (34) qui inclut une partie de base faisant saillie hors du plan de l'unité de matière plastique moulée et une partie d'accrochage (34a) fléchie par-dessus pour s'étendre de manière sensiblement parallèle à l'unité de matière plastique moulée (4).

7. Commande (2) selon la revendication 6, dans laquelle la plaque de montage métallique comprend une ouverture (36) qui est dimensionnée pour recevoir le crochet moulé (34) et dans laquelle l'ouverture (36) est éventuellement formée dans une partie de la plaque de montage (6) qui fait saillie hors du plan de la plaque de montage (6).

8. Commande (2) selon la revendication 7, dans laquelle l'ouverture (36) comprend un bord moulé (38) qui est agencé pour s'accoupler à une saillie ou une indentation correspondante sur une surface en regard du crochet moulé (34) et dans laquelle la partie d'accrochage (34a) comprend éventuellement une saillie ou une indentation incurvée sur la face en regard du crochet moulé (34).

9. Commande (2) selon l'une quelconque des revendications 6-8, dans laquelle le crochet moulé (34) fournit un point de fixation entre la plaque de montage métallique (6) et l'unité de matière plastique moulée (4).

10. Commande (2) selon la revendication 9, dans laquelle la commande (2) deux autres points de fixation respectivement fournis par ladite agrafe métallique (22) et une autre agrafe métallique (22) et éventuellement dans laquelle lesdits trois points de fixation sont espacés l'un de l'autre pour former les sommets d'un triangle couvrant une partie centrale de la commande (2).

11. Commande (2) selon l'une quelconque des revendications précédentes, dans laquelle la plaque de montage métallique (6) comprend un diamètre maximal qui n'est pas supérieur à 75mm, qui est éventuellement inférieur à 70mm, éventuellement d'environ 67 mm.

12. Commande (2) selon l'une quelconque des revendications précédentes, dans laquelle un premier et un second actionneur bimétallique (15a, 15b) sont montés sur une surface de la plaque de montage métallique (6) et agencés pour actionner le au moins un commutateur, dans laquelle le premier et le second actionneur bimétallique (16a, 16b) ont des formes différentes.

13. Commande (2) selon l'une quelconque des revendications précédentes, dans laquelle l'unité de matière plastique moulée (4) comprend une paroi cylindrique hébergeant un connecteur électrique sans cordon de 360° (8).

14. Récipient de chauffage de liquide comprenant une base (50) en contact avec un liquide au cours de son utilisation et un élément de chauffage (52) monté en contact thermique avec la base (50) et une commande (2) selon l'une quelconque des revendications précédentes avec la plaque de montage métallique (6) de la commande (2) fixée à la base (50) dans une zone circonscrite par l'élément de chauffage (52).

15. Récipient de chauffage de liquide selon la revendication 14, dans lequel la zone circonscrite par l'élément de chauffage comprend un diamètre maximal qui est inférieur à 70 mm.
